# EUROPÄISCHE PATENTSCHRIFT

(11) **EP 1 477 361 B1**
(45) Veröffentlichungstag und Bekanntmachung des Hinweises auf die Patenterteilung: **16.09.2009**
(21) Anmeldenummer: 04005223.5
(22) Anmeldetag: 05.03.2004
(51) Int. Cl.: B60P 3/05

(54) **Transportbehälter mit Aufhängungsschienen und Sperrnocken**
Transport container with rails and locking cam
Conteneur de transport avec une tringle et un clapet de verrouillage

(30) Priorität: 15.05.2003 DE 20307605 U
(43) Veröffentlichungstag der Anmeldung: 17.11.2004
(73) Patentinhaber: Fahrzeugwerk Bernard Krone GmbH, 48480 Spelle (DE)
(72) Erfinder: Krone, Bernard, Dr., 48480 Spelle (DE); Evers, Heinz, 49733 Haren (DE)
(74) Vertreter: Pott, Ulrich

(56) Entgegenhaltungen:
- DE-U- 7 117 450
- DE-U- 7 308 171
- DE-U1- 8 020 523
- DE-U1- 8 113 074
- GB-A- 2 294 437
- US-A- 4 277 095
- PATENT ABSTRACTS OF JAPAN Bd. 1997, Nr. 03, 31. März 1997 (1997-03-31) & JP 08 310290 A (TOMOE TEKKO:KK), 26. November 1996 (1996-11-26)

## Beschreibung

Die vorliegende Erfindung bezieht sich auf einen Transportbehälter mit im oberen Bereich des Transportbehälters angeordneten und sich in einer Längsrichtung erstreckenden Aufhängungsschienen, an denen Ladung aufhängbar und innerhalb des Transportbehälters förderbar ist, wobei der Förderweg für ein hängendes Ladungsstück mittels eines Sperrelementes auf einen Abschnitt einer Aufhängungsschiene begrenzbar ist, und als Sperrelement ein Sperrnocken mittels einer Schiebebewegung entlang einer ausgeformten Kulisse von einer nicht sperrenden Lage in eine Sperrlage bewegbar ist.

Solcherlei Transportbehälter finden sich insbesondere als Kühlauflieger für den LKW-Transport von hängenden Schweinehälften oder Rinderhälften. Während nachfolgend nur von Kühlaufliegern die Rede ist, versteht sich für den Fachmann von selbst, daß die Erfindung bei aller Art von Transportbehältern wie insbesondere auch Containern und dergleichen verwendbar ist. Auch das Transportgut ist nicht auf Tierhälften beschränkt, sondern kann bei jedwedem Transportgut genutzt werden. An der Laderampe des Schlachthofes hängen die Tierhälften an Fleischhaken, die mit Rollen über Laufschienen beweglich sind. Die Tierhälften werden in die Kühlauflieger befördert, indem die Rollen mit den daran hängenden Tierhälften über Weichen auf die Aufhängungsschienen in den Transportbehälter gerollt werden. Im Kühlauflieger können die Tierhälften dann in ihre Transportposition gerollt werden. Allerdings dürfen die Tierhälften nicht zu dicht hängen, da die Fleischqualität durch Druckstellen negativ beeinflußt werden würde. Deshalb werden die Tierhälften beabstandet zueinander in dem Kühlauflieger positioniert.

Damit insbesondere bei Bremsmanövern, aber auch anderen fahrdynamischen Prozessen die Ladung nicht verrutscht, kann die Länge der Aufhängungsschienen durch axial bewegliche Sperrstangen in einzelne Abschnitte unterteilt werden. Die Sperrstangen sind quer zur Längsrichtung der Aufhängungsschienen beabstandet zueinander angeordnet und jeweils von zumindest zwei mit einer Durchführungsöffnung versehenen Winkeleisen gehalten. Die Sperrstangen sind an einem Ende in einem Winkel von ca. 70° zu einer Griffstange abgebogen, damit sie leichter von Hand verschoben werden können. In einer Sperrposition verhindern die Sperrstangen, daß eine Rolle in einen benachbarten durch eine Sperrstange abgesperrten Abschnitt einer Aufhängungsschiene rollt.

Ein gattungsgemäßes Sperrelement ist aus der Schrift DE 7308171 U bekannt. Als Sperrelement findet sich dort eine von einer Führungshülse gehaltene, in axialer Richtung verschiebbare Sperrstange. Bei den herkömmlichen Sperrstangen hat sich als nachteilig erwiesen, daß diese oben unter der Decke bei einer Höhe des Aufbaus des Transportbehälters von 2,50 bis 2,80 m schwer erreichbar sind. Um die Sperrstangen betätigen zu können, muß der Fahrer des LKWs auf eine Kiste oder eine Gitterbox steigen, um die Sperrstangen verschieben zu können. Dies ist gefährlich, weil der Boden in den Kühlaufliegern von Fett und Kondenswasser glitschig ist. Auch die verwendeten Steighilfen sind häufig unsicher. Eine einfache Leiter kann nicht genutzt werden, weil diese leicht wegrutscht. Es kommt auch häufig vor, daß die Rollen bei nicht waagerechter Parkposition des Kühlaufliegers mit dem Gewicht der Tierhälften gegen die Sperrstangen drücken. Diese sind dann nur schwer zu betätigen, weil sich zu den Haltewinkeln oder der Führungshülse der Sperrstange ein langer Hebelweg mit entsprechend hohen Preßdrücken ergibt. Auch ist die Verschiebbarkeit der bekannten Sperrstange nur in axialer Richtung von Nachteil, weil die Führungshülse zumindest etwa waagerecht angeordnet sein muß, um ein ungewolltes Ver- oder Entriegeln der Sperrstange durch Bewegungen des Transportbehälters zu vermeiden. Die zumindest etwa waagerechte Anordnung der Führungshülse erzwingt eine quer gerichtete Bewegung der Sperrstange unter der Decke des Transportbehälters, bei der vom Boden des Transportbehälters aus nur schwer entsprechende Zug- oder Druckkräfte auf die Sperrstange aufgebracht werden können.

Aus dem Stand der Technik sind verschiedene Arretierungssysteme zur Ladungssicherung bekannt, bei denen ein loses Halteelement in einer Arretierungseinrichtung verankerbar ist. Allerdings gehen die losen Halteelemente leicht verloren, und die formschlüssige Arretierung ist unter Last schwer zu lösen. Ein Beispiel für ein solches System findet sich in der DE 100 40 058. Auch sind Arretierungssysteme bekannt, bei denen ein Sperrnocken um eine Rotationsachse verschwenkbar ist, um von einer nicht sperrenden in einer Sperrlage verbracht zu werden. Ein Beispiel hierfür findet sich in der Schrift DE 8020523. Bei diesen Sperrnocken ist jedoch die Beweglichkeit auf eine reine Drehbewegung eingeschränkt.

Es ist die Aufgabe der vorliegenden Erfindung, die Ladungssicherung für Transportgüter, die hängend an Aufhängungsschienen transportiert werden, in der Handhabung zu vereinfachen.

Die Aufgabe wird für einen gattungsgemäßen Transportbehälter gelöst, indem der Sperrnocken die Kulisse als Ausnehmung aufweist. Diese Ausbildung des Sperrelementes hat den Vorteil, daß kaum noch Kraft nötig ist, um einen Sperrnocken in die gewünschte Lage zu verbringen. Der Sperrnocken kann mit einer Stange betätigt werden. Dadurch entfällt das lästige Herbeischaffen von Aufstiegshilfen. Die Betätigung ist einfacher und sicherer. Die Sperrnocken können dichter an den Aufhängungsschienen positioniert werden, wodurch sich niedrigere Hebelkräfte bei Rollen ergeben, die gegen einen Sperrnocken drücken. Zur Betätigung eines Sperrnockens muß die Bedienperson nicht mehr genau unter der Sperrstange stehen, eine Bedienung ist auch aus einer seitlichen Position möglich. Über die Stange sind die Sperrnocken also leichter zugänglich.

Weitere Vorzüge und vorteilhafte Ausgestaltungen der Erfindung ergeben sich aus der nachfolgenden Beschreibung, den Merkmalen der Unteransprüche und den Zeichnungen.

Die Erfindung soll nun anhand eines Ausführungsbeispiels näher beschrieben werden. Es zeigen:
- Figur 1:: einen Blick in einen Transportbehälter mit Aufhängungsschienen,
- Figur 2:: einen Blick von unten auf eine Befestigungskonsole mit einem Sperrnocken in einer "Offen"-Position,
- Figur 3:: den Blick aus Figur 2 mit dem Sperrnocken in einer Sperrposition,
- Figur 4: einen Blick von oben auf eine Befestigungskonsole mit einem Sperrnocken in einer "Offen"-Position,
- Figur 5:: den Blick aus Figur 4 mit dem Sperrnocken in einer Sperrposition.

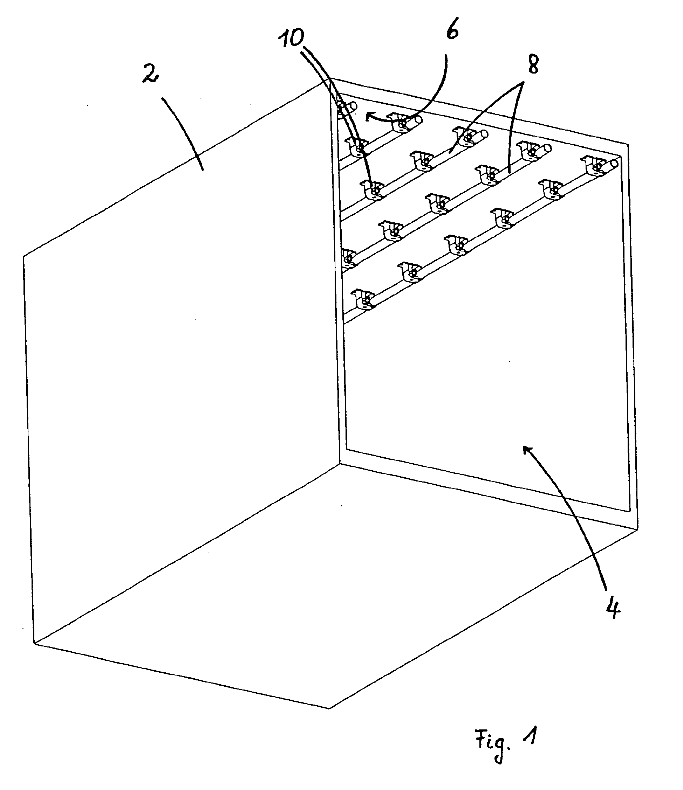

In Fig. 1 ist ein Transportbehälter 2 zu sehen, der einen in der Darstellung offen gezeigten Laderaum 4 aufweist. Nach oben hin wird der Laderaum 4 durch die Decke 6 begrenzt, an der Aufhängungsschienen 8 befestigt sind. Die Aufhängungsschienen 8 verlaufen in Längsrichtung des Transportbehälters 2, wobei mehrere Aufhängungsschienen parallel und beabstandet zueinander unter der Decke 6 angeordnet sind. Die Aufhängungsschienen 8 sind mit Befestigungskonsolen 10 an der Decke 6 befestigt.

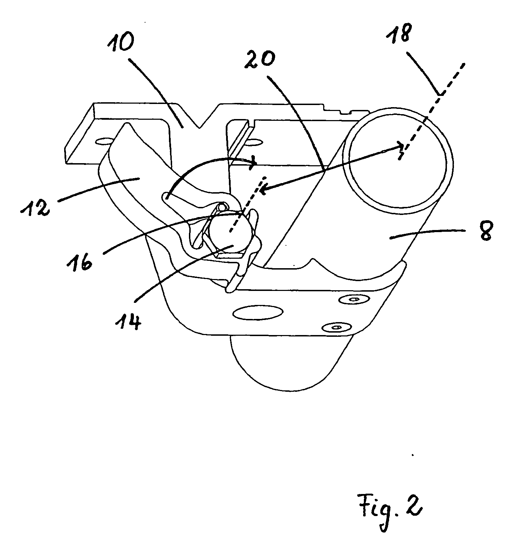

Die Fig. 2 zeigt einen Blick von unten auf eine Befestigungskonsole 10. An der Befestigungskonsole 10 ist ein Sperrnocken 12 befestigt, der drehbar auf einem Schraubbolzen 14 gelagert ist. Der Sperrnocken 12 dreht sich bei Betätigung um die Rotationsachse 16, die der Längsmittelachse des Schraubbolzens 14 entspricht. Im Ausführungsbeispiel liegt die Rotationsachse 16 parallel zur Längsrichtung 18 der Aufhängungsschiene 8. Eine Parallellage der Rotationsachse 16 zur Längsrichtung 18 ist jedoch nicht zwingend erforderlich. Vorteilhaft ist jedoch der Versatz 20 zwischen der Rotationsachse 16 und der Längsmittelachse der Aufhängungsschiene 8, die in Fig. 2 der Längsrichtung 18 entspricht. Dadurch, daß die Rotationsachse 16 einen seitlichen Abstand zur Längsmittelachse der Aufhängungsschiene 8 aufweist, kann der Sperrnocken 12 bei einer Drehbewegung aus der in Fig. 2 gezeigten "Offen"-Position in eine Sperrposition verlagert werden.

Die Aufhängungsschiene 8 ist von der Befestigungskonsole 10 mit einem solchen Abstand zur Decke 6 und zu den Halteflanschen der Befestigungskonsole 10 gehalten, daß die Rolle eines daran befestigten hängenden Ladungsstücks frei auf der Aufhängungsschiene 8 beweglich ist. Im Ausführungsbeispiel ist die Aufhängungsschiene 8 als Rohr gezeigt, andere Schienengeometrien sind jedoch möglich.

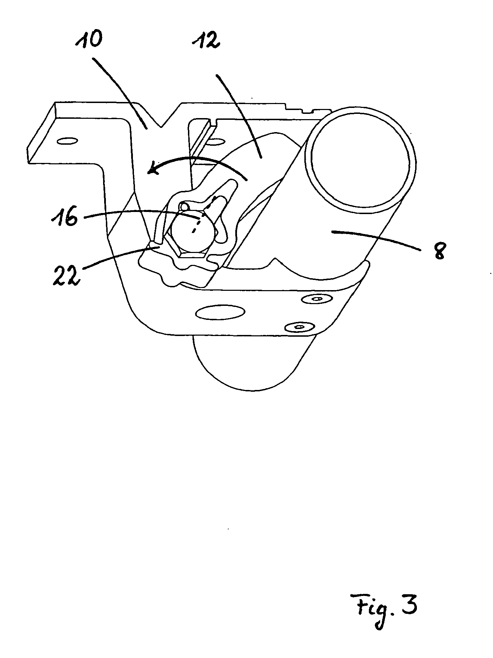

Befindet sich der Sperrnocken 12 in der in Fig. 3 gezeigten Schwenkstellung, so ragt dieser in den freien Bauraum oberhalb der Aufhängungsschiene 8 hinein. Wenn eine Rolle mit einem daran hängenden Ladungsstück in den Wirkbereich des Sperrnokkens 12 gerät, so kann die Rolle an dieser Stelle nicht mehr in Richtung des Sperrnockens 12 weiter bewegt werden, weil dieser eine weitere Bewegung der Rolle versperrt. Erst wenn der Sperrnocken 12 wieder in die in Fig. 2 dargestellte Ausgangsposition zurückverschwenkt wird, ist die Passage für eine Rolle in diesen Bereich wieder möglich.

Aufgrund der gewählten Geometrien im Ausführungsbeispiel und der Konstruktion des Sperrnockens 12 liegt der Schwerpunkt des Sperrnockens 12 in der Sperrposition in einem deutlichen Abstand zur Rotationsachse 16. Hierdurch ist gewährleistet, daß der Sperrnocken 12 sicher in seiner Sperrposition verbleibt. Da der Sperrnocken 12 andererseits jedoch nur durch sein Eigengewicht in der Sperrposition gehalten ist, muß nur eine geringe Kraft aufgewendet werden, um den Sperrnocken 12 in eine "Offen"-Position zu verschwenken.

Um einen guten Ansatzpunkt für den Ansatz der Betätigungsstange zu bieten, weist der Sperrnocken 12 zumindest einen Vorsprung 22 in seiner äußeren Form auf. Wenn die Betätigungsstange am oberen Ende einen Haken aufweist, ist es sehr leicht, mit diesem Haken hinter den Vorsprung 22 zu fassen und durch eine Zugbewegung an der Betätigungsstange den Sperrnocken 12 aus der Sperrposition in eine "Offen"-Position zu verlagern.

Da - wie aus Fig. 1 ersichtlich ist - eine Aufhängungsschiene 8 durch eine Mehrzahl von Befestigungskonsolen 10 gehalten ist, können durch die Anbringung von Sperrnocken an mehreren der Befestigungskonsolen 10 einer Aufhängungsschiene 8 verschiedene Abschnitte gebildet werden, innerhalb derer eine oder mehrere darin befindliche Rollen frei beweglich sind. Um eine unerwünschte Verlagerung der Ladungsstücke während des Transportes zu begrenzen, ist es sinnvoll, die Abschnitte nicht zu groß auszuwählen. Je nach Anwendungsfall kann jede Befestigungskonsole 10 einen Sperrnocken 12 aufweisen, es ist jedoch auch denkbar, nur einzelne Befestigungskonsolen einer Aufhängungsschiene 8 mit einem Sperrnocken zu versehen. Andererseits können Sperrnocken 12 auch mittels eigener Halterungen unabhängig von einer Befestigungskonsole 10 in Wirknähe zu einer Aufhängungsschiene 8 angeordnet sein. Eine solche eigene Halterung ist in den Zeichnungen nicht dargestellt.

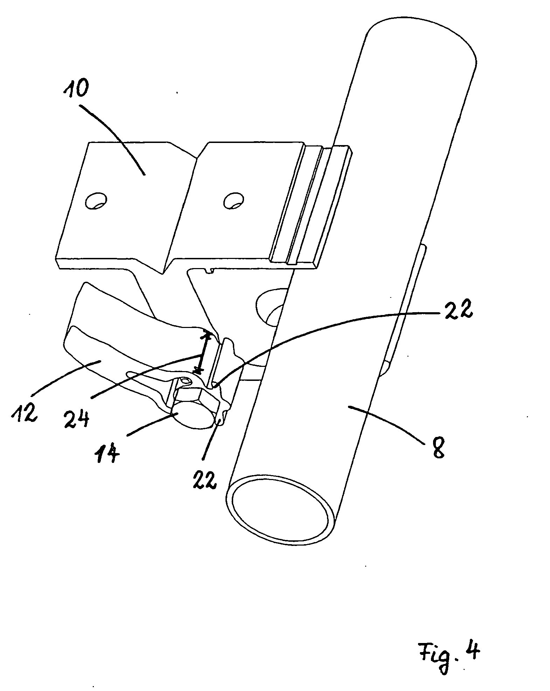

In der in Fig. 4 dargestellten Draufsicht von oben auf eine Befestigungskonsole 10 ist der Sperrnocken 12 gut sichtbar. Um im Bereich der Rotationsachse 16 über eine ausreichende Festigkeit zu verfügen, sollte die Dicke 24 ausreichend bemessen sein. Als Mindestwert wird eine Dicke 24 von mindestens 1 cm vorgeschlagen. Durch die Mindestdicke im Bereich der Rotationsachse ist auch eine sichere Führung des Sperrnockens 12 für die Verschwenkbewegung gewährleistet, ein Verkanten des Sperrnockens 12 auch unter Last wird bei zunehmender Dicke und entsprechend bemaßter Toleranzen zunehmend unwahrscheinlich.

Um eine ausreichende Festigkeit des Sperrnockens 12 insgesamt sicherzustellen, ist die in Fig. 4 im Bereich der Rotationsachse vorhandene Dicke 24 über die gesamte Länge des Sperrnockens 12 annähernd gleich.

An Stelle des in den Ausführungsbeispielen dargestellten Schraubbolzens 14 kann auch eine andere technische Lösung, die als Welle dient, eingesetzt werden. So ist es vorstellbar, die Befestigungskonsolen 10 oder spezielle Halterungen für den Sperrnocken 12 als Gußteil auszubilden, das einen entsprechend als Welle nutzbaren Vorsprung aufweist.

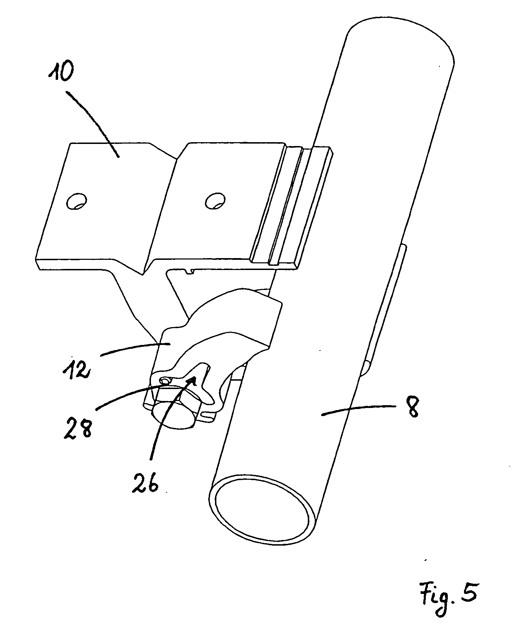

In Fig. 5 befindet sich der Sperrnocken 12 wieder in einer Sperrposition. Der Sperrnocken 12 weist eine Ausnehmung 26 auf, die als eine Art Kulisse ausgebildet ist. In die Ausnehmung 26 ragt eine Anschlagswelle 28 hinein, die über die Oberfläche der Ausnehmung 26 den Sperrbolzen 12 in einer Position hält. Wenn der Durchmesser der Anschlagswelle 28 sowie die Ausformung der Ausnehmung 26 als Kulisse entsprechend aufeinander abgestimmt sind, ist es möglich, bei entsprechender konstruktiver Abstimmung der Kulissenform mit der Lage des Schwerpunktes des Sperrnockens 12 diese so aufeinander abzustimmen, daß der Sperrnocken 12 in der Kulisse entweder in einer "Offen"- oder Sperrposition zu liegen kommt. Eine solche Wirkung wird beispielsweise erzielt, wenn die Kulisse in der Seitenansicht eine V-, U- oder J-förmigen Verlauf zeigt.

Durch die erfindungsgemäße Ausgestaltung des Sperrbolzens 12 ist dieser leicht und gefahrlos bedienbar und mit einer Stange ohne weitere Aufstiegshilfen sehr gut zugänglich. Der Sperrnocken 12 ist auch unter Last leicht betätigbar. Durch die Befestigung des Sperrnockens 12 an den Befestigungskonsolen 10 wird auch der konstruktive Aufwand sowie die Herstellungskosten sehr niedrig gehalten. Außerdem kann das System bei Funktionsstörungen sehr leicht durch Lösen der Schraubverbindung ausgetauscht werden.

## Patentansprüche

1. Transportbehälter (2) mit zumindest einer im oberen Bereich des Transportbehälters (2) angeordneten und sich in einer Längsrichtung erstreckenden Aufhängungsschiene (8), an der Ladung aufhängbar und innerhalb des Transportbehälters (2) förderbar ist, wobei der Förderweg für ein hängendes Ladungsstück mittels eines Sperrelementes auf einen Abschnitt der Aufhängungsschiene (8) begrenzbar ist, und als Sperrelement ein Sperrnocken (12) mittels einer Schiebebewegung entlang einer ausgeformten Kulisse von einer nicht sperrenden Lage in eine Sperrlage bewegbar ist, **dadurch gekennzeichnet, daß** der Sperrnocken (12) die Kulisse als Ausnehmung (26) aufweist.

2. Transportbehälter (2) nach Anspruch 1, **dadurch gekennzeichnet, daß** in die äußere Gestalt eines Sperrnockens (12) zumindest ein Vorsprung (22) eingeformt ist.

3. Transportbehälter (2) nach Anspruch 1 oder 2, **dadurch gekennzeichnet, daß** die Dicke (24) des Sperrnockens (12) über seine Länge im wesentlichen gleich ist.

4. Transportbehälter (2) nach einer der vorhergehenden Ansprüche, **dadurch gekennzeichnet, daß** der Sperrnocken (12) an einer Befestigungskonsole (10) zur Befestigung der Aufhängungsschiene (8) befestigt ist.

5. Transportbehälter (2) nach Anspruch 9, **dadurch gekennzeichnet, daß** die Befestigung des Sperrnockens (12) mittels eines Schraubbolzens (14) erfolgt, der in die Befestigungskonsole (10) eingedreht ist.

## Claims

1. Transporting container (2) having at least one suspension rail (8), arranged in the upper region of the transporting container (2), which extends in a longitudinal direction and from which the load can be suspended and on which the load can be fed along within the transporting container (2), the distance for which a suspended part of the load can be fed along being able to be confined to a section of the suspension rail (8) by means of a barrier member and, to act as a barrier member, a barrier lug (12) being able to be moved from a non-barring position to a barring position by means of a sliding movement along a shaped guideway, **characterised in that** the barrier lug (12) has the guideway in the form of an opening (26).

2. Transporting container (2) according to claim 1, **characterised in that** at least one projection (22) is formed on the external configuration of a barrier lug (12).

3. Transporting container (2) according to claim 1 or 2, **characterised in that** the thickness (24) of the barrier lug (12) is substantially the same throughout its length.

4. Transporting container (2) according to one of the foregoing claims, **characterised in that** the barrier lug (12) is fastened to a fastening bracket (10) for fastening the suspension rail (8) in place.

5. Transporting container (2) according to claim 4, **characterised in that** the barrier lug (12) is fastened in place by means of a bolt (14) which is screwed into the fastening bracket (10).

## Revendications

1. Conteneur de transport (2) avec au moins un rail de suspension (8) agencé dans la zone supérieure du conteneur de transport (2) et s'étendant dans un sens longitudinal, au niveau duquel un chargement peut être accroché et transporté à l'intérieur du conteneur de transport (2), le chemin de transport d'un élément de chargement suspendu pouvant être limité à une section du rail de suspension (8) à l'aide d'un élément verrouillage, et un taquet de verrouillage (12) sous forme d'élément de verrouillage pouvant être déplacé d'une position non verrouillante à une position de verrouillage par coulissement le long d'une coulisse façonnée, **caractérisé en ce que** le taquet de verrouillage (12) présente la coulisse sous forme d'évidement (26).

2. Conteneur de transport (2) selon la revendication 1, **caractérisé en ce qu'**au moins une saillie (22) est moulée dans la structure extérieure d'un taquet de verrouillage (12).

3. Conteneur de transport (2) selon la revendication 1 ou 2, **caractérisé en ce que** l'épaisseur (24) du taquet de verrouillage (12) est essentiellement la même sur toute sa longueur.

4. Conteneur de transport (2) selon l'une quelconque des revendications précédentes, **caractérisé en ce que** le taquet de verrouillage (12) est fixé au niveau d'une console de fixation (10) pour fixer le rail de suspension (8).

5. Conteneur de transport (2) selon la revendication 4, **caractérisé en ce que** le taquet de verrouillage (12) est fixé à l'aide d'un boulon fileté (14), qui est vissé dans la console de fixation (10).
